# EUROPÄISCHE PATENTSCHRIFT

(11) **EP 2 661 092 B1**
(45) Veröffentlichungstag und Bekanntmachung des Hinweises auf die Patenterteilung: **23.07.2014**
(21) Anmeldenummer: 13001502.7
(22) Anmeldetag: 23.03.2013
(51) Int. Cl.: H04Q 1/06, H05K 7/14

(54) **Glasfaser-Netzverteilerschrank**
Fibreglass network distributor
Armoire distributrice de réseau à fibre de verre

(30) Priorität: 03.05.2012 DE 102012008923
(43) Veröffentlichungstag der Anmeldung: 06.11.2013
(73) Patentinhaber: Langmatz GmbH, 82467 Garmisch-Partenkirchen (DE)
(72) Erfinder: Bruweleit, Stefan, 82467 Garmisch-Partenkirchen (DE); Schuster, Axel, 82467 Garmisch-Partenkirchen (DE)
(74) Vertreter: Flosdorff, Jürgen

(56) Entgegenhaltungen:
- US-A1- 2006 158 866
- US-A1- 2008 055 822
- US-A1- 2011 277 292

## Beschreibung

Die Erfindung betrifft einen Glasfaser-Netzverteilerschrank mit einem Gehäuse, in dem Glasfaserkabel von einem unteren Eingangsbereich zu Spleißstellen verlegbar sind, wobei das Gehäuse eine Rückwand, eine Oberwand, Seitenwände und eine zu öffnende Tür aufweist und bevorzugt aus Kunststoff besteht und wobei in dem Gehäuse zwischen dessen Rückwand und der Tür eine schwenkbare Wand angelenkt ist, an deren Vorderseite sich die Spleißstellen befinden. Der Kabeleingangsbereich befindet sich am Boden des Gehäuses hinter der schwenkbaren Wand.

Ein beispielhaftes Netzverteilerschrank ist gezeigt in dem Dokument US2008/0055822, veröffentlicht am 6. März 2008, von CARR LLP, Donald P. Rearick.

Ein derartiger Glasfaser-Netzverteilerschrank (auch Kabelverzweigergehäuse genannt) ist aus der DE 20 2005 019 319 U1 bekannt. Dabei ist in das Gehäuse ein rahmenförmiger Grundkörper eingebaut, der eine sich über den ganzen Innenraum des Schrankgehäuses erstreckende Rückwand aufweist, an der in matrixartiger Anordnung mehrere Kabelführungselemente befestigt sind, die in Form von nebeneinander verlaufenden Spalten und übereinander verlaufenden Reihen über die gesamte Rückwand verteilt sind. Von diesen Kabelführungs-elementen werden die Glasfaserkabel zur Vorderseite der an dem Grundkörper angelenkten schwenkbaren Wand geführt, wo sich die Spleißstellen befinden.

Die an dem Grundkörper befestigte Rückwand, die eine erste Montageebene für die Glasfaserkabel bildet, ist im Inneren des Schrankgehäuses vor dessen Rückwand angeordnet, deren einzige Funktion darin besteht, den Innenraum des Netzverteilerschranks nach außen abzudichten. Die Rückwand des eingebauten Grundkörpers, die sich über den gesamten Innenraum des Netzverteilerschranks erstreckt, erfordert einen beträchtlichen Materialeinsatz und trägt zu einem erheblichen Gewicht des Netzverteilerschranks bei, zumal diese Einbaurückwand aus Stabilitätsgründen aus Metall bestehen muss. Da die Einbaurückwand an einem rahmenartigen Träger befestigt ist, der an den Wänden des Kunststoffgehäuses des Netzverteilerschranks angebracht ist, hat der Einbau keinerlei Flexibilität, so dass bei einem gewaltsamen Aufprall insbesondere auf eine Seitenwand des Netzverteilerschranks durch ein Kraftfahrzeug nicht nur das Kunststoffgehäuse, sondern auch die Einbaurückwand beschädigt bzw. zerbeult wird. Da Netzverteilerschränke der betrachteten Art häufig an Straßen stehen, ist auch dies ein relevantes Kostenproblem.

Der vorliegenden Erfindung liegt die Aufgabe zugrunde, einen besser geeigneten Glasfaser-Netzverteilerschrank anzugeben.

Diese Aufgabe wird erfindungsgemäß durch die Merkmale des Patentanspruchs 1 gelöst.

Vorteilhafte Ausgestaltungen der Erfindung sind in den Unteransprüchen gekennzeichnet.

Die Erfindung sieht vor, dass an dem Eintrittsbereich für die Glasfaserkabel ins Innere des Gehäuses ein Bodenblech angebracht ist, das Schlitze zum Durchführen der von unten bevorzugt durch einen Unterschrank hindurchge-führten Glasfaserkabel/Mikropipes in das Gehäuse aufweist, und dass das Bodenblech an seinem rückwärtigen Randbereich mit einer aufrechten Wand versehen ist, an der Kabelhalteelemente angebracht sind, an denen die von unten eingeführten Glasfaserkabel/Mikropipes befestigbar sind. Die aufrechte Wand ist vorzugsweise einstückig mit dem Bodenblech ausgebildet und um bevorzugt 90° aufgebogen. Sie kann aber beispielsweise auch am hinteren Rand der geschlitzten Bodenplatte angeschweißt oder angeschraubt sein. Aus Stabilitäts-gründen sollten das Bodenblech und die aufrechte Wand aus Metall bestehen.

Das Bodenblech erstreckt sich zweckmäßigerweise nur über einen Teil der Breite des Gehäuses, und die aufrechte Wand nur über einen Teil des Innenraums. Es ist ausreichend, wenn sie etwa ein Viertel der Fläche der Rückwand des Gehäuses einnimmt, wozu weiter unten näher beschriebene Kabelhalteelemente beitragen, die eine besonders dichte Anordnung der Glasfaserkabel an der aufrechten Wand ermöglichen. Ein Großteil der Rückwand des bevorzugt aus Kunststoff bestehenden Schrankgehäuses wird von der aufrechten Wand nicht überdeckt und steht zur Befestigung u.a. von Kabelführungselementen zur Verfügung.

Da die aufrechte Wand nur eine verhältnismäßig geringe Fläche einnimmt, erfordert sie wenig Material und ist sehr viel leichter als eine sich über den gesamten Innenraum des Gehäuses erstreckende Einbaurückwand. Bei einem schlagartigen Aufprall auf das Gehäuse kann die aufrechte Wand mit der Bodenplatte unbeschädigt bleiben, da sie sich nicht über die gesamte Breite des Gehäuses erstreckt, sondern Platz zum Ausweichen vorhanden ist.

In näheren Einzelheiten wird vorgeschlagen, dass das Bodenblech an oder in einem metallenen Rahmen befestigt ist, der sich am Boden des Gehäuses befindet. Das Bodenblech ist dabei mit großem Vorteil durch Sollbruchmittel an dem Rahmen befestigt, die so ausgebildet sind, dass sie bei einem schlagartigen Aufprall auf das Gehäuse und einer Kraftausübung auf das Bodenblech und/oder die aufrechte Wand das Bodenblech frei geben können, so dass diese unbeschädigt bleiben und wieder verwendbar sind. Hierzu kann das Bodenblech mit Zungen versehen sein, die in Hülsen des Rahmens eingesteckt sind, die durch Einschnitte in dem Rahmen leicht ausbrechen können, wenn eine entsprechende Kraft ausgeübt wird.

Die an der Bodenplatte angeformte aufrechte Wand nimmt in dichter Anordnung eine große Anzahl von Glasfaserkabeln/Mikropipes auf, indem eine Vielzahl von Kabelhalteelementen parallel zueinander und dicht nebeneinander an der Wand befestigt sind. Die Kabelhalteelemente sind in lang gestreckter Form vorzugs-weise aus einem Metallblech geschnitten und haben von unten nach oben treppenartig zurück versetzte Vorsprünge, an denen Mittel zum Halten von Glasfaserkabeln/Mikropipes befestigt sind. Als Mittel sind mit großem Vorteil lösbar befestigte Clipse vorgesehen, die jeweils einen klauenartigen Klemmabschnitt haben, in den ein Glasfaserkabel/Mikropipe seitlich eindrückbar und einklemmbar ist. Diese Clipse bestehen vorzugsweise aus einem thermo-plastischen Kunststoff.

Um die von den Kabelhalteelementen in dichter Anordnung nebeneinander und hintereinander gruppierten Glasfaserkabel/Mikropipes sicher zur Vorderseite der schwenkbaren Wand mit den daran befestigten Spleißkassetten etc. zu führen, sind an der Rückwand des Gehäuses mehrere Kabelführungselemente angebracht. Diese Kabelführungselemente nehmen jeweils ein Kabelbündel entlang einer gebogenen Bahn auf. Hierzu sind für jedes Kabelbündel jeweils wenigstens drei Kabelführungselemente entlang eines Bogens angeordnet, dessen Radius den zulässigen Mindestbiegeradius der Glasfaserkabel nicht unterschreiten darf.

Mit besonderem Vorteil wird vorgeschlagen, dass die Kabelführungselemente aus einem elastischen Material bestehen und so verformbar sind, dass die Glasfaserkabel bei Auftreten einer Zugkraft bestimmter Größe aus den Führungselementen austreten können. Da die Glasfaserkabel im Bereich der Kabelführungselemente entlang eines Bogens verlegt sind, besteht für das Austreten aus den Führungselementen ein seitlicher Freiraum, ohne den die Glasfaserkabel durch die Zugkraft, die beispielsweise aus Erdarbeiten in der Nähe des Glasfaser-Netzverteilerschranks resultieren kann, beschädigt oder zerstört würden.

Die Erfindung sieht somit einen Glasfaser-Netzverteilerschrank vor, bei dem hinter der schwenkbaren Wand, deren Vorderseite die Montageebene für Spleiß- und/oder Patch-Verbindungen bildet, nur eine kleine aufrechte Wand zum dichten Verlegen von Glasfaserkabeln angeordnet ist. Diese aufrechte Wand ist an der Bodenplatte angesetzt, an der die Kabel in das Gehäuse eintreten. Die Rückwand des aus Kunststoff bestehenden Schrankgehäuses wird zur Befestigung von Kabelführungselementen auf deren Verlegebahn zur Vorderseite der schwenk-baren Einbauwand genutzt. Der erfindungsgemäße Netzverteilerschrank hat ein verhältnismäßig geringes Gewicht infolge verringerten Materialeinsatzes, ist kostengünstiger herstellbar, und da die die Kabelhalteelemente tragende aufrechte Wand an der Bodenplatte befestigt ist und bei einem Aufprall frei gegeben werden kann, weniger schadensanfällig.

Nachfolgend wird eine Ausführungsform der Erfindung mit Bezug auf die beigefügten Zeichnungen näher beschrieben. Dabei zeigen:
- Figur 1: einen Glasfaser-Netzverteilerschrank mit geöffneter Tür und herausgeschwenkter Einbauwand;
- Figur 2: die Anordnung gemäß Figur 1 ohne Gehäuse;

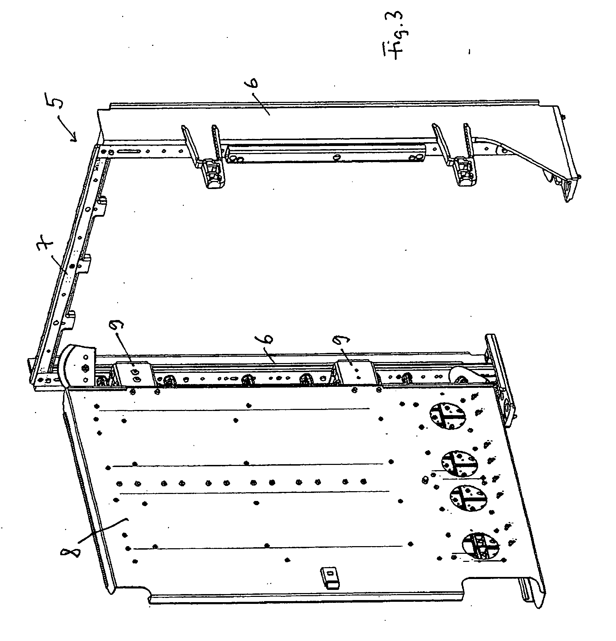

- Figur 3: die schwenkbare Einbauwand mit dem sie haltenden Einbaugestell;

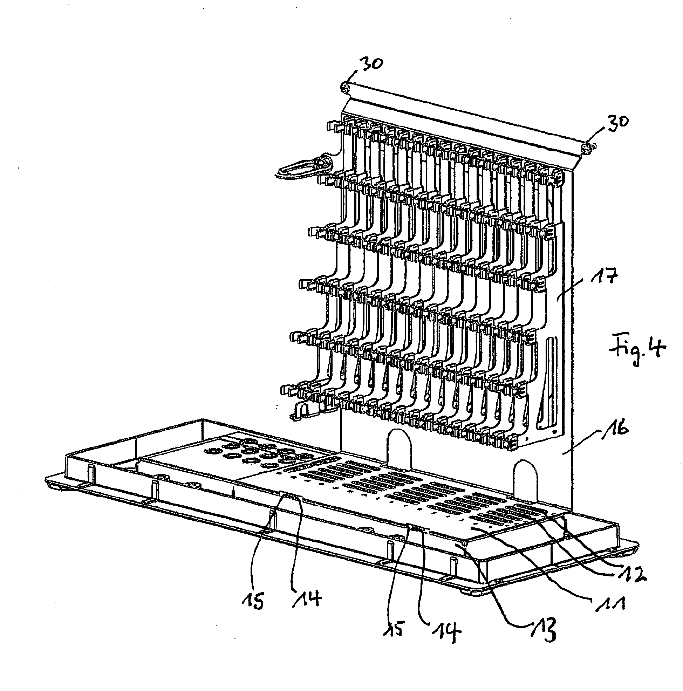

- Figur 4: das Bodenblech mit der aufgebogenen Wand;
- Figur 5: eines der an der aufrechten Wand angebrachten Kabelhalteelemente;
- Figur 6: das Kabelhalteelement der Figur 5 mit befestigten Clipsen;
- Figur 7: das Kabelhalteelement mit daran befestigten Glasfaserkabeln;
- Figur 8: eine Aufsicht auf einen der Clipse in stark vergrößerter Darstellung.

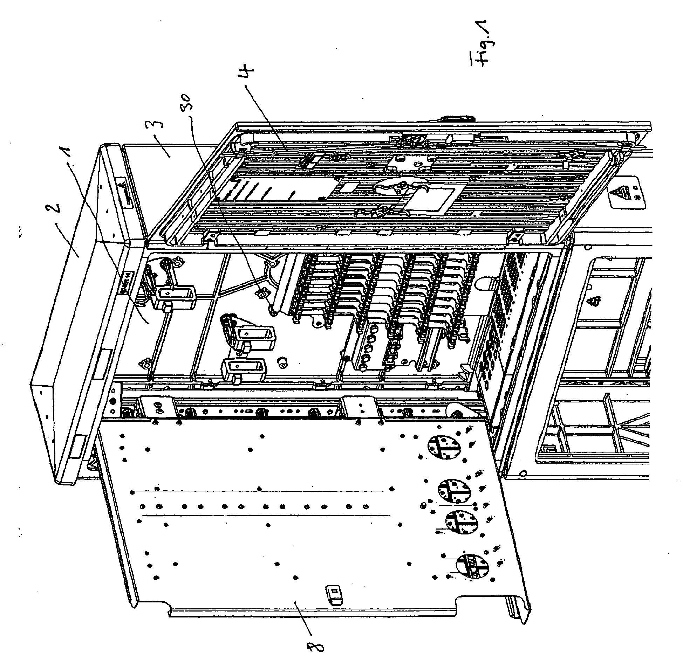

Figur 1 zeigt einen Glasfaser-Netzverteilerschrank mit einem aus Kunststoff bestehenden Gehäuse, das eine Rückwand 1, eine Oberwand 2, zwei Seiten-wände 3 und eine zu öffnende Tür 4 aufweist. In das Gehäuse ist ein portalartiges Gestell 5 eingebaut, das seitliche Stützen 6 und einen diese verbindenden oberen Querriegel 7 aufweist. Das aus metallverstärktem Kunststoff bestehende Gestell 5 ist lösbar an den Seitenwänden 3 des Gehäuses befestigt und hält eine schwenkbare Wand 8, die mit Scharnieren 9 an der in den Figuren linken vertikalen Stütze 6 des Gestells 5 befestigt ist. An der in den Figuren nicht zu sehenden Vorderseite der schwenkbaren aus Metall bestehenden Wand 8 befinden sich u.a. Spleißkassettenhalter mit Spleißkassetten, zu denen die Glasfaserkabel verlegt werden.

Das Gehäuse des Glasfaser-Netzverteilerschranks steht auf einem Unterschrank 10, durch den Glasfaserkabel in den Netzverteilerschrank eingeführt werden. Hierzu ist am Boden des Netzverteilerschrank-Gehäuses ein Bodenblech 11 mit Schlitzen 12 angeordnet, durch die die Glasfaserkabel in das Gehäuse eingeführt werden. Das aus Metall bestehende Bodenblech 11 ist hierzu in einem ebenfalls aus Metall bestehenden Rahmen 13 angeordnet und lösbar an diesem befestigt, indem zwei vorstehende Zungen 14 des Bodenblechs durch am oberen Rand des Rahmens 13 ausgebildete Schlitze 15 geführt sind. Unter den Schlitzen 15 befinden sich Sollbruchstellen in dem Rahmen 13, so dass die die Schlitze 15 enthaltenden Randabschnitte des Rahmens 13 bei einer hinreichend großen schlagartigen Belastung abbrechen und das Bodenblech 11 freigeben können.

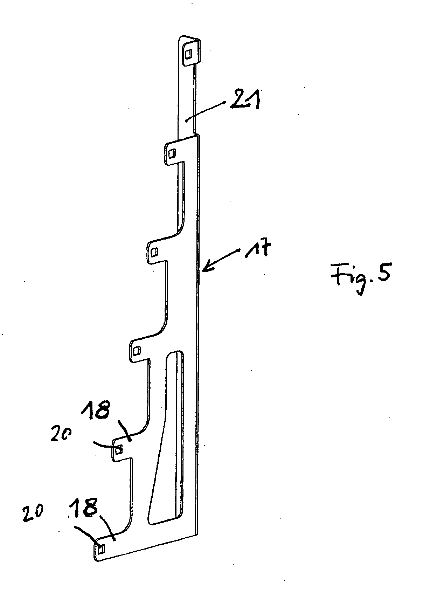

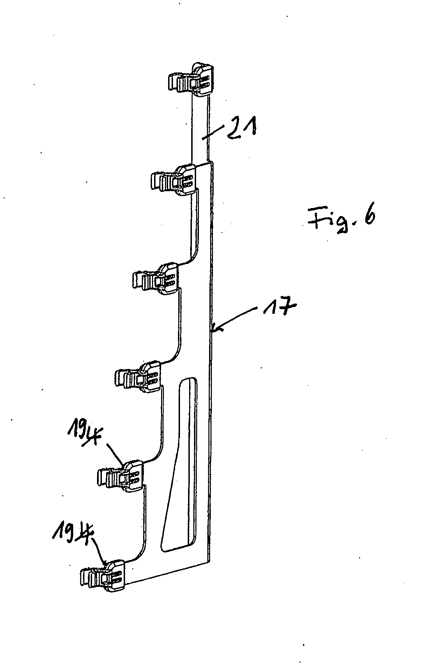

An der Rückseite des Bodenblechs 11 befindet sich einstückig mit diesem eine um 90° aufgebogene Wand 16, an der dicht nebeneinander Kabelhalteelemente 17 befestigt sind. Diese in den Figuren 5 bis 7 dargestellten Kabelhalteelemente sind jeweils aus einem Metallblech hergestellt und haben übereinander nach oben hin treppenförmig zurück versetzt mehrere rechteckige Vorsprünge 18, auf die jeweils ein Clip 19 aufgeschnappt ist. An der Rückseite ist jedes Kabelhalte-element 17 mit einem rechtwinklig abgebogenen Steg 21 versehen, der an der aufrechten Wand 16 befestigbar, beispielsweise anschraubbar ist.

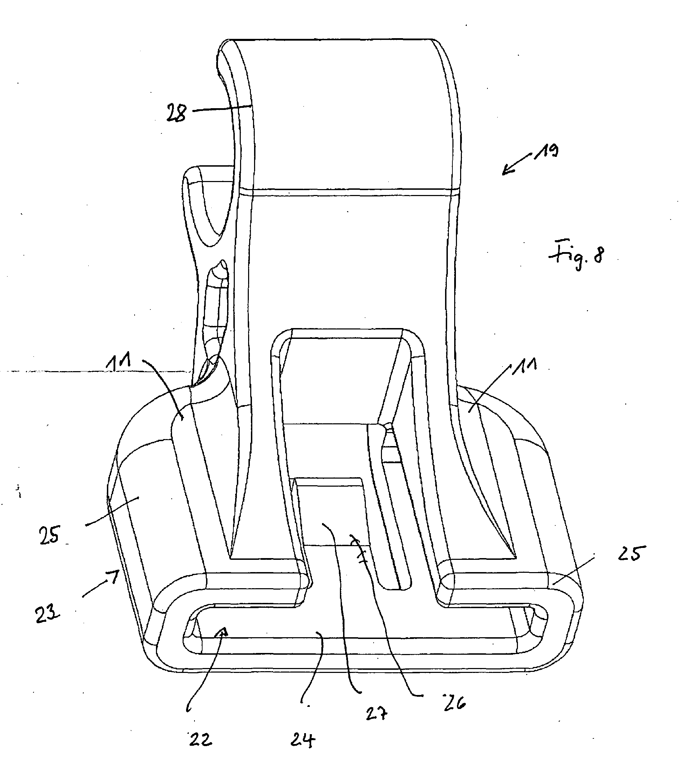

Wie Figur 8 zeigt, hat jeder Clip 19 eine schmale Eintrittsöffnung 22, in die - relativ betrachtet - ein Vorsprung 18 des Kabelhalteelementes 17 eintritt. Der Clip 19 hat eine Eintrittsöffnung 22 an einem taschenförmigen Abschnitt 23 mit einer unteren geradlinigen Basiswand 24, die an beiden seitlichen Rändern insgesamt U-förmig zurückgebogen ist, so dass U-förmige Randabschnitte 25 ausgebildet sind. Aus der Basiswand 24 ist eine sich in Einschubrichtung erstreckende Federzunge 26 freigeschnitten, die eine rampenförmig ansteigende Rastnase 27 hat.

Die beiden U-förmigen Randabschnitte 25 haben eine geschlossene Rückwand, die als Anschlag für den Vorsprung 18 dient. In dieser Lage schnappt die Rastnase 27 in die fensterförmige Aussparung 20 des Vorsprungs 18 ein, so dass der Clip 19 nur dann wieder von dem Kabelhalteelement 17 abgenommen werden kann, wenn zuvor das Federelement 26 mit seiner Rastnase 27 aus dem Fenster 20 herausgebogen wurde.

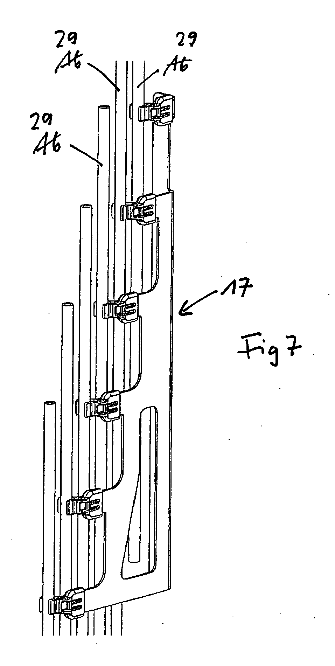

Der taschenförmige Abschnitt 23 ist mit einem klauenartigen Klemmabschnitt 28 verbunden, der querschnittlich eine Kreisbogenform hat, die sich ein wenig über 180° erstreckt, so dass Glasfaserkabel 29 elastisch in dem Klemmabschnitt festgeklemmt werden können, wie Figur 7 zeigt.

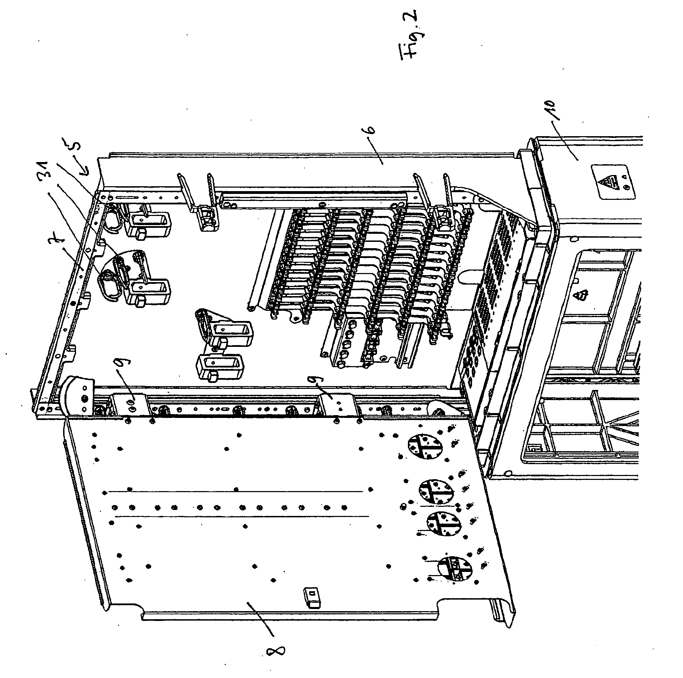

Mit Hilfe der Kabelhalteelemente 17 und der Clipse 19 kann eine große Anzahl von Glasfaserkabeln an der aufrechten Wand 16 in dichter Anordnung befestigt werden, so dass die aufrechte Wand 16 nur eine verhältnismäßig geringe Fläche haben muss. Sie erstreckt sich - wie die Figuren 1 und 2 zeigen - etwa über die halbe Breite und die halbe Höhe des Innenraums des Gehäuses des Netzverteilerschranks. Die aufrechte Wand 16 kann mit zwei Schrauben 30 an einem abgewinkelten oberen Randabschnitt an der Rückwand des Kunststoff-gehäuses festgeschraubt werden.

Die Rückwand 1 des Netzverteilerschrank-Gehäuses ist nur zu einem Teil ihrer Fläche von der aufrechten Wand 16 überdeckt. In dem freien Bereich sind oberhalb der aufrechten Wand 16 Kabelführungselemente 31 befestigt. Diese bestehen jeweils aus einem offenen, vorzugsweise ovalen Ring mit sich überlappenden Enden und dienen dazu, Bündel von Glasfaserkabeln zum in den Figuren linken Randbereich der Rückwand 1 zu führen, von wo sie durch die zwischen dem Rand der schwenkbaren Tür 8 und der seitlichen Stütze 6 des Einbaugestells 5 verbleibenden Freiraum zur Vorderseite der schwenkbaren Wand 8 geführt werden. Die von der aufrechten Wand 16 kommenden Glasfaserkabel werden zu Bündel zusammengefasst durch jeweils drei Kabelführungselemente 31 hindurchgeführt, die entlang eines Bogens angeordnet sind, dessen Radius den zulässigen Mindestbiegeradius der Glasfaserkabel nicht unterschreitet. Die Kabelführungselemente bestehen aus einem elastischen Material und sind so verformbar, dass die Glasfaserkabel bei Auftreten einer Zugkraft aus den Führungselementen seitlich austreten können. Hierdurch ist eine Beschädigung der Glasfaserkabel bei Einwirken großer Zugkräfte auf die Kabel zuverlässig verhindert.

Es wird betont, dass die Erfindung nicht auf die beschriebenen und dargestellten Ausführungsformen beschränkt ist, Vielmehr sind alle offenbarten Merkmale auf jede sinnvolle Weise einzeln miteinander kombinierbar.

## Patentansprüche

1. Glasfaser-Netzverteilerschrank mit einem Gehäuse, in dem Glasfaserkabel von einem unteren Eingangsbereich zu Spleißstellen verlegbar sind,
wobei das Gehäuse eine Rückwand, eine Oberwand, Seitenwände und eine zu öffnende Tür aufweist,
wobei ferner in dem Gehäuse zwischen dessen Rückwand und der Tür eine schwenkbare Wand angelenkt ist, an deren Vorderseite sich die Spleißstellen befinden und
wobei sich der Kabeleingangsbereich hinter der schwenkbaren Wand befindet,
**dadurch gekennzeichnet,**
**dass** an dem Eingangsbereich ein Bodenblech (11) angebracht ist, das Schlitze (12) zum Durchführen der von unten ankommenden Glasfaserkabel/Mikropipes in das Gehäuse aufweist,
und **dass** das Bodenblech (11) an seinem rückwärtigen Rand mit einer aufrechten Wand (16) versehen ist, an der Kabelhalteelemente (17) angebracht sind, an denen die eingeführten Glasfaserkabel/Mikropipes (29) befestigbar sind.

2. Glasfaser-Netzverteilerschrank nach Anspruch 1,
**dadurch gekennzeichnet,**
**dass** das Bodenblech (11) an einem Rahmen (13) befestigt ist, der am Boden des Gehäuses angeordnet ist.

3. Glasfaser-Netzverteilerschrank nach Anspruch 2,
**dadurch gekennzeichnet,**
**dass** das Bodenblech (11) mit Sollbruchmitteln (14,15) an dem Rahmen (13) befestigt ist, die bei einem schlagartigen Aufprall auf das Gehäuse das Bodenblech (11) frei geben können.

4. Glasfaser-Netzverteilerschrank nach einem der Ansprüche 1 bis 3,
**dadurch gekennzeichnet,**
**dass** die aufrechte Wand (16) einstückig mit dem Bodenblech ausgebildet ist.

5. Glasfaser-Netzverteilerschrank nach einem der Ansprüche 1 bis 4,
**dadurch gekennzeichnet,**
**dass** die aufrechte Wand (16) sich nur über einen Teil der Höhe und vorzugsweise auch nur über einen Teil der Breite des Innenraums des Gehäuses erstreckt.

6. Glasfaser-Netzverteilerschrank nach einem der Ansprüche 1 bis 5,
**dadurch gekennzeichnet,**
**dass** an der Rückwand (1) des Gehäuses Kabelführungselemente (31) befestigt sind, durch die die von den Kabelhalteelementen (17) kommenden Glasfaserkabel (29) verlegbar sind, bevor sie zur Vorderseite der schwenkbaren Wand (8) verlaufen.

7. Glasfaser-Netzverteilerschrank nach Anspruch 6,
**dadurch gekennzeichnet,**
**dass** die Kabelführungselemente (31) aus einem elastischen Material bestehen, und so verformbar sind, dass die Glasfaserkabel (29) bei Auftreten einer Zugkraft aus den Führungselementen (31) austreten können.

8. Glasfaser-Netzverteilerschrank nach Anspruch 7,
**dadurch gekennzeichnet,**
**dass** jeweils wenigstens drei Kabelführungselemente (31) entlang eines Bogens angeordnet sind, dessen Radius den zulässigen Mindestbiegeradius der Glasfaserkabel (29) nicht unterschreitet.

9. Glasfaser-Netzverteilerschrank nach den Ansprüchen 1 bis 8,
**dadurch gekennzeichnet,**
**dass** eine Vielzahl von Kabelhalteelementen (17) nebeneinander an der aufrechten Wand befestigt sind, die in ihrer Längsrichtung treppenartig versetzte Vorsprünge (18) aufweisen, an denen Clipse (19) zum Halten von Glasfaserkabeln/Mikropipes (29) befestigt sind.

10. Glasfaser-Netzverteilerschrank nach Anspruch 9,
**dadurch gekennzeichnet,**
**dass** die Clipse (19) jeweils einen klauenartigen Klemmabschnitt (28) haben, in den ein Glasfaserkabel/Mikropipe (29) seitlich eindrückbar ist.

## Claims

1. An optical fibre network distributor with a housing, in which glass fibre cables may be installed from a lower input region to splice sites, wherein the housing has a rear wall, an upper wall, side walls and a door which may be opened, wherein further hinged in the housing between its rear wall and the door there is a pivotable wall, on whose front side the splice sites are located and wherein the cable input region is situated behind the pivotable wall, **characterised in that** fixed to the input region there is a base plate (11), which has slits (12) for the passage of the glass fibre cables/micropipes coming from below into the housing and that the base plate (11) is provided on its rear wall with an upstanding wall (16), to which cable retaining elements (17) are attached, to which the introduced glass fibre cables/micropipes (29) may be fastened.

2. An optical fibre network distributor as claimed in claim 1, **characterised in that** the base plate (11) is fastened to a frame (13), which is arranged on the base of the housing.

3. An optical fibre network distributor as claimed in claim 2, **characterised in that** the base plate (11) is fastened to the frame (13) with breaking means (14, 15), which can release the base plate (11) in the event of a sudden impact on the housing.

4. An optical fibre network distributor as claimed in one of claims 1 to 3, **characterised in that** the upstanding wall (16) is constructed integrally with the base plate.

5. An optical fibre network distributor as claimed in one of claims 1 to 4, **characterised in that** the upstanding wall (16) extends over only a proportion of the height and preferably also only over a proportion of the breadth of the interior of the housing.

6. An optical fibre network distributor as claimed in one of claims 1 to 5, **characterised in that** secured to the rear wall (1) of the housing there are cable guiding elements (31) through which the glass fibre cables (29) coming from the cable retaining elements (17) may be installed before they extend to the front side of the pivotable wall (8).

7. An optical fibre network distributor as claimed in claim 6, **characterised in that** the cable guiding elements (31) consist of an elastic material and are deformable so that the glass fibre cables (29) can move out of the guide elements (31) if a tensional force should occur.

8. An optical fibre network distributor as claimed in claim 7, **characterised in that** in each case at least three cable guiding elements (31) are arranged along an arc, the radius of which does not fall below the permissible minimum bending radius of the glass fibre cables (29).

9. An optical fibre network distributor as claimed in claims 1 to 8, **characterised in that** fastened next to one another to the upstanding wall there is a plurality of cable retaining elements (17), which have projections (18) offset in the direction of their length in the manner of steps, fastened to which are clips (19) for retaining glass fibre cables/micropipes (29).

10. An optical fibre network distributor as claimed in claim 9, **characterised in that** the clips (19) each have a claw-like clamping section (28) into which a glass fibre cable/micropipe (29) may be laterally pressed.

## Revendications

1. Armoire distributrice de réseau à fibre de verre avec un boîtier, dans lequel des câbles à fibre de verre peuvent être posés d'une zone d'entrée inférieure jusqu'à des épissures,
le boîtier présentant une paroi arrière, une paroi supérieure, des parois latérales et une porte à ouvrir,
une paroi pivotante étant de plus articulée dans le boîtier, entre sa paroi arrière et la porte, sur le côté avant de laquelle se trouvent les épissures et
la zone d'entrée de câble se trouvant derrière la paroi pivotante,
**caractérisée en ce que** :
une tôle de fond (11) est montée sur la zone d'entrée, laquelle présente des fentes (12) pour le passage des câbles à fibre de verre/microconduits arrivant d'en bas dans le boîtier,
et **en ce que** la tôle de fond (11) est pourvue sur son bord arrière d'une paroi verticale (16) sur laquelle des éléments de retenue de câble (17) sont montés, sur lesquels les câbles à fibre de verre/microconduits (29) introduits peuvent être fixés.

2. Armoire distributrice de réseau à fibre de verre selon la revendication 1,
**caractérisée en ce que** :
la tôle de fond (11) est fixée sur un cadre (13) qui est disposé sur le fond du boîtier.

3. Armoire distributrice de réseau à fibre de verre selon la revendication 2,
**caractérisée en ce que** :
la tôle de fond (11) est fixée avec des moyens destinés à la rupture (14, 15) sur le cadre (13), qui peuvent libérer la tôle de fond (11) en cas d'impact brusque sur le boîtier.

4. Armoire distributrice de réseau à fibre de verre selon l'une quelconque des revendications 1 à 3,
**caractérisée en ce que** :
la paroi verticale (16) est réalisée d'un seul tenant avec la tôle de fond.

5. Armoire distributrice de réseau à fibre de verre selon l'une quelconque des revendications 1 à 4,
**caractérisée en ce que** :
la paroi verticale (16) s'étend seulement sur une partie de la hauteur et, de préférence, aussi seulement sur une partie de la largeur de l'espace intérieur du boîtier.

6. Armoire distributrice de réseau à fibre de verre selon l'une quelconque des revendications 1 à 5,
**caractérisée en ce que** :
des éléments de guidage de câble (31) sont fixés sur la paroi arrière (1) du boîtier, par lesquels les câbles à fibre de verre (29) venant des éléments de retenue de câble (17) peuvent être posés avant qu'ils s'étendent vers le côté avant de la paroi pivotante (8).

7. Armoire distributrice de réseau à fibre de verre selon la revendication 6,
**caractérisée en ce que** :
les éléments de guidage de câble (31) se composent d'un matériau élastique et sont déformables de sorte que les câbles à fibre de verre (29) puissent sortir des éléments de guidage (31) lors de la survenue d'une force de traction.

8. Armoire distributrice de réseau à fibre de verre selon la revendication 7,
**caractérisée en ce que** :
respectivement au moins trois éléments de guidage de câble (31) sont disposés le long d'un arc dont le rayon n'est pas inférieur au rayon de courbure minimal autorisé des câbles à fibre de verre (29).

9. Armoire distributrice de réseau à fibre de verre selon l'une quelconque des revendications 1 à 8,
**caractérisée en ce que** :
une pluralité d'éléments de retenue de câble (17) sont fixés les uns à côté des autres sur la paroi verticale, lesquels présentent des saillies (18) décalées en gradins dans leur sens longitudinal, sur lesquelles des clips (19) sont fixés pour retenir des câbles à fibre de verre/microconduits (29).

10. Armoire distributrice de réseau à fibre de verre selon la revendication 9,
**caractérisée en ce que** :
les clips (19) présentent respectivement une section de serrage (28) de type pince, dans laquelle un câble à fibre de verre/microconduit (29) peut être enfoncé latéralement.
